# EUROPEAN PATENT APPLICATION

(11) **EP 4 365 800 A1**
(43) Date of publication of application: **08.05.2024**
(21) Application number: 23207022.7
(22) Date of filing: 31.10.2023
(51) Int. Cl.: G06Q 10/10, G06Q 10/0633, H04L 67/53, G06Q 10/063

(54) **PROVIDING STRATEGIC RECOMMENDATIONS, LINKS TO ACTIONABLE TASKS, PERFORMANCE PLANNING, AND MEASUREMENTS IN A WORKFLOW**

(30) Priority: 02.11.2022 US 202217978970
(71) Applicant: Ricoh Company, Ltd., Tokyo 143-8555 (JP)
(72) Inventor: BLOHM, Nicole, Boulder, 80301-9270 (US); EVANS, Merlyn, Boulder, 80301-9270 (US); PATEL, Ashish, Boulder, 80301-9270 (US)
(74) Representative: SSM Sandmair

(57) **Abstract**

Techniques for providing strategic recommendations, links to actionable tasks, performance planning, and measurements in a workflow are provided. In one technique, electronic documents pertaining to multiple items that are managed by an online digital service are received. Based on processing the electronic documents, workflow data for the items are stored. The workflow data comprises multiple workflow data items, each indicating a status of a corresponding item of the multiple items. A request for item data associated with a particular item of the multiple items is received from a computing device. In response to receiving the request, the item data is retrieved and additional data that is generated by a computer system that is separate from the apparatus is retrieved. The additional data is one of descriptive data, prescriptive data, or predictive data. The item data and the additional data are presented simultaneously on a screen of the computing device.

## Description

### RELATED APPLICATION DATA

This application is related to U.S. Patent Application No. 17/196,503 entitled SOFTWARE SERVICE INTEGRATION IN A CENTRAL SOFTWARE PLATFORM, filed March 9, 2021, the contents of which are incorporated by reference in their entirety for all purposes as if fully set forth herein.

### TECHNICAL FIELD

The present disclosure relates generally to electronic workflow processing of multiple items, and more specifically, to a system that integrates data from multiple systems in a single user interface to assist users in taking actionable steps to resolve issues in a workflow of item.

### BACKGROUND

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

Many organizations utilize a large number of different software services, often with different providers. Examples include mail services, payment services, chat interfaces, claim management services, and other services that allow a company to run effectively. While many of the services used by a company utilize similar or related information, the services are often disparate with no interaction between them. Indeed, enterprises generally become significantly siloed, each functional area developing their own IT systems over time. This creates computational inefficiency as communication across services must be manually performed, creating a delay in the processing of important information and increasing the likelihood of non-optimal decisions being made. The lack of connection between software services often exists due to services being provided by different service providers or services provided by a single provider being modular in implementation, allowing a user to select which services to have activated.

### SUMMARY

Techniques for providing strategic recommendations, links to actionable tasks, performance planning, and measurements in a workflow are provided. In one technique, electronic documents pertaining to multiple items that are managed by an online digital service are received. Based on processing the electronic documents, workflow data for the items are stored. The workflow data comprises multiple workflow data items, each indicating a status of a corresponding item of the multiple items. A request for item data associated with a particular item of the multiple items is received from a computing device. In response to receiving the request, the item data is retrieved and additional data that is generated by a computer system that is separate from the apparatus is retrieved. The additional data is one of descriptive data, prescriptive data, or predictive data. The item data and the additional data are presented simultaneously on a screen of the computing device.

### BRIEF DESCRIPTION OF THE DRAWINGS

In the figures of the accompanying drawings like reference numerals refer to similar
FIG. 1 is a block diagram that depicts an example system architecture for intaking documents and integrating intelligent insights with data reflected in the documents, in an embodiment;
FIG. 2 is a block diagram that depicts example inputs and outputs of an insight generator, in an embodiment;
FIGs. 3A-3B are screenshots of an example user interface that combines insights with item-related data, in an embodiment;
FIG. 4A is a screenshot of an example user interface for displaying details of pending claims, in an embodiment;
FIG. 4B is a screenshot of an example user interface for displaying insights along with details of a claim, in an embodiment;
FIG. 5A is a screenshot of an example user interface that displays insights along with team-level data for a manager, in an embodiment;
FIG. 5B is a screenshot of an example user interface that includes a pop-up window for displaying a workload calculator, in an embodiment;
FIG. 6 is a flow diagram that depicts an example process for integrating insights with item data that pertains to a workflow, in an embodiment;
FIG. 7 is a block diagram of a computer system on which embodiments of the invention may be implemented.

### DETAILED DESCRIPTION

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections.

### GENERAL OVERVIEW

A system and method are provided for integrating intelligent insights into a workflow relating to multiple items that are managed by a digital service. Examples of a digital service include a claims processing service, an invoice processing service, a print management service, and a return mail processing service. Thus, items may refer to claims, invoices, electronic documents, or return mail.

In one approach, electronic documents pertaining to the items are received and processed. Based on the processing, workflow data is created and stored for the items. Each workflow data item indicates a status of a corresponding item. Later, a request, from a computing device, for item data associated with a particular item is received. In response to the request, the item data is retrieved along with additional data that is generated by a remote computer system. The additional data is one of descriptive data that describes an attribute of the particular item relative to other items, prescriptive data that indicates an action to perform, or predictive data that indicates a prediction of a future event based on state data associated with the particular item. The item data and the additional data are caused to be presented simultaneously on a screen of the computing device.

Embodiments improve computer-related technology by generating item-related data and combining such data with insights from multiple data sources in a single view. This single view provides an end-to-end view of an enterprise's entire data ecosystem, even leveraging data sources outside the enterprise's data ecosystem. Some of the insights may be actionable that allows users to process items in a workflow more efficiently. Some embodiments involve user interfaces that provide team managers and team members access to appropriate levels of information that pertain to their respective roles.

### SYSTEM OVERVIEW

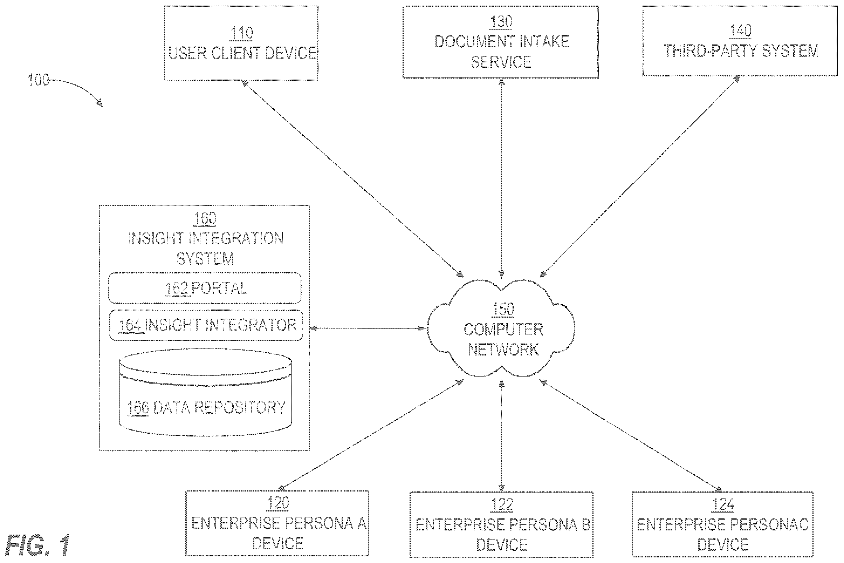

FIG. 1 is a block diagram that depicts an example system architecture 100 for intaking documents and integrating intelligent insights with data reflected in the documents, in an embodiment. System architecture 100 comprises a user client device 110, an enterprise persona A device 120, an enterprise persona B device 122, an enterprise persona C device 124, a document intake service 130, a third-party system 140, a computer network 150, and an insight integration system 160, which includes a portal 162, an insight integrator 164, and a data repository 166.

Although only a single element of each of elements 120-150 is depicted, system architecture 100 may include multiple of these elements. For example, multiple user client devices 110, multiple enterprise persona B devices 122, and multiple third-party systems 140 may be communicatively coupled to each other and/or to insight integrator 164 through computer network 150.

Enterprise persona devices 120-124, document intake service 130, and insight integration system 160 may all belong to the same enterprise or organization. The organization provides one or more digital services to other organizations and/or end-users, such as insurance policy holders. Examples of a digital service include a claims processing service, an invoice processing service, a print management service, and a return mail processing service.

Examples of computer network 150 include a local area network (LAN), a wide area network (WAN), an ethernet, the Internet, or one or more terrestrial, satellite, or wireless links. Different elements in system architecture 100 communicate with each other over computer network 150.

### USER CLIENT DEVICE

Examples of user client device 110 include a laptop computer, a desktop computer, a tablet computer, a smartphone, a wearable device, a scanning machine, a fax machine, a printer, and a multi-functional peripheral (MFP). User client device 110 executes an application that is communicatively coupled to insight integration system 160 or document intake service 130. The application may be a native application that is installed on user client device 110. Alternatively, the application may be a web application that executes within a web browser that is installed on user client device 110.

In some embodiments, user client device 110 is operated by an individual end-user who is representing him/herself. In other embodiments, user client device 110 is operated by a user who is acting on behalf of an organization. For example, in the (insurance) claims processing scenario, user client device 110 transmits digital images, web forms, and/or other types of electronic data to document intake service 130 in order to create and submit a claim. As another example, in the invoice processing scenario, user client device 110 submits an invoice on behalf of an organization that uses the invoice processing service provided by the enterprise that hosts insight integration system 160.

### ENTERPRISE PERSONA DEVICES

Enterprise persona devices 120-124 are computing devices that are communicatively coupled to insight integration system 160 over one or more computer networks, such as computer network 150. Enterprise persona A device 120 may have access to data in data repository 166 that is not accessible to enterprise persona B and C devices 122-124. Similarly, enterprise persona B device 122 may have access to data in data repository 166 that is not accessible to enterprise persona C device 124.

For example, in the claims processing context, enterprise persona A device 120 represents a computing device of an owner or principle of the enterprise that provides the claim processing service, enterprise persona B device 122 represents a computing device of a manager who manages multiple claims assessors, and enterprise persona C device 124 represents a computing device of one of those claim assessors. Each manager has access to data about a staffing level plan and current staffing levels of their team, team performance metrics (e.g., by phase, type of claim, errors, and payout) about their team, customer satisfaction rates for their team, and escalations. In contrast, each claim assessor has access to data about cases assigned to them, next steps for each claim, risk assessment for each claim, claim assembly, and missing data. However, an enterprise persona B device 122 may access everything to which a particular enterprise persona C device 124 has access.

Enterprise persona devices 120-124 may not be fixed computing devices. For example, enterprise persona devices 120-124 may only act as such when authenticated by insight integration system 160 or a separate identity authentication system. For example, only after entering a valid username and password for a person of persona A status can a user operate his/her device as enterprise persona A device 120. Similarly, only after entering a valid username and password for a person of persona B status can a user operate his/her device as enterprise persona B device 122. Thus, a computing device may be a personal computing device that may be trusted once valid credentials are received and verified.

System architecture 100 may also include enterprise data storage systems (not depicted) that store data that is accessible to enterprise persona devices 120-124. Such storage systems may be on site or hosted remotely in a cloud provided by a third-party cloud hosting service. In the context of claims processing, insurers have three core systems or databases: a policy holder database, a product database (which stores codes associated with different insurance products), and a claims management system that manages active claims (and may store data about inactive claims). Records in each of these systems or databases may be supplemented with insights, as described in more detail herein. Such storage systems may store (a) action data that describes actions that have been performed relative to an item in the past, (b) stage data that indicates a stage (within a workflow, described in more detail below) in which an item is assigned based on what data has been received for the item and/or what actions have been performed relative to the item, and (c) next steps data that indicates what steps or actions remain for the item to have a complete or finished status.

### DOCUMENT INTAKE SERVICE

Document intake service 130 is a digital service that processes electronic documents. Document intake service 130 may be part of a document intake system that comprises one or more computing devices, such as printers, scanners, fax machines, and/or multi-functional peripherals (MFPs). Document intake service 130 may be provided by the enterprise that hosts insight integration system 160 or by a third-party entity. Document intake service 130 accepts electronic data representing digital images, scanned documents, PDF documents, word processing document, or other types of electronic data. Such electronic data may originate from user client device 110, an enterprise persona device, or another computing device. For example, a user of user client device 110 make take a picture with a camera that is integrated into device 110 and cause a digital image thereof to be transmitted (directly or indirectly) to document intake service 130. As another example, a user of user client device 110 sends an email with one or more attachments that are automatically processed by document intake service 130. As another example, a user of user client device 110 scans a printed document and causes the user client device 110 to transmits the scan data to document intake service 130.

Document intake service 130 accepts and processes electronic documents. Processing may involve associating each electronic document with a user and/or organization. Such associating may involve identifying a username, a source email address, a user identifier, a claim number, or any other identifier or combination of data within or accompanying an electronic document. Such identifying information is mapped to a user identifier in data repository 166 and stored in association with that user identifier. For example, document intake service 130 identifies a source email address in an email that includes a photo attachment. Document intake service 130 identifies a unique user identifier that is associated with the source email address and causes the photo attachment to be stored in a record associated with the unique user identifier. Similarly, a combination of user identifying data associated with an electronic document transfer may cause a search of records in data repository 166 for a record that matches most (or all) of the combination of data. Alternatively, instead of document intake service 130 performing the record lookup, document intake service 130 transmits user identifying data (along with one or more electronic documents) to insight integration system 160, which performs the record lookup and ultimate storing.

### THIRD-PARTY SYSTEM

Third-party system 140 provides a third-party service or data source to the enterprise that hosts insight integration system 160. Third-party system 140 is communicatively coupled to insight integration system 160 over computer network 150. Examples of third-party services that third-party system 140 provides include risk assessment, forecast casting, trend analysis, and/or a prediction relative to an item (e.g., a claim in insurance claim processing) that the enterprise manages. Examples of third-party data sources include a car value assessment service (such as Kelley Blue Book), a property value database, and a NCOA (national change of address) or PCOA (proprietary change of address). Other data sources may include customer systems of record, such as policy information, status, policy limit data, and active claims.

Third-party system 140 may supplement data about an item with additional information. Such additional information may be used to make a prediction or assessment of an item, such as generating a fraud score. For example, if third-party system 140 is a car value assessment service, then insight integration system 160 (or another system of the enterprise) may send, to the car value assessment service, data about a car related to a claim, such as the make, model, year, and other features of the car. In response, the car value assessment service provides, to insight integration system 160, a range of car values for the car. Such a range may be used by insight integration system 160 to detect any anomalies associated with the claim.

Third-party system 140 may implement one or more machine-learning techniques to generate one or more machine-learned models that, given an input, produce output that represents a score or prediction, depending on the dependent variables of the machine-learned models. For example, given information about a claim (e.g., location of incident, value of car, date since first reporting, whether a picture of the car exists, whether other information is missing, age of policy holder, a payout estimate), a machine-learned model generates a score that indicates a prediction of whether the policy holder will accept the payout estimate.

Third-party system 140 may generate one or more machine-learned models based on data from the enterprise that hosts insight integration system 160, based on data from other sources, or based on both sources. In the latter two instances, third-party system 140 may have access to a significant amount of information, making it more likely that output generated by the one or more machine-learned models is pertinent and valuable to the enterprise.

### INSIGHT INTEGRATION SYSTEM

Insight integration system 160 provides data about items (e.g., claims, returned mail, electronic documents) along with insights that are relevant to those items. Data about the items are stored in data repository 166. Data about an item (or "item data") comprises one or more attributes with corresponding values. In the context of return mail processing, an item is a returned piece of mail, an item has a name of an entity (e.g., of a person or organization), a category of the entity (important, not important), a status of the entity (e.g., within a workflow or pipeline managed by the enterprise), a mailing address of the entity, a phone number of the entity (if one exists), and an email address of the entity (if one exists).

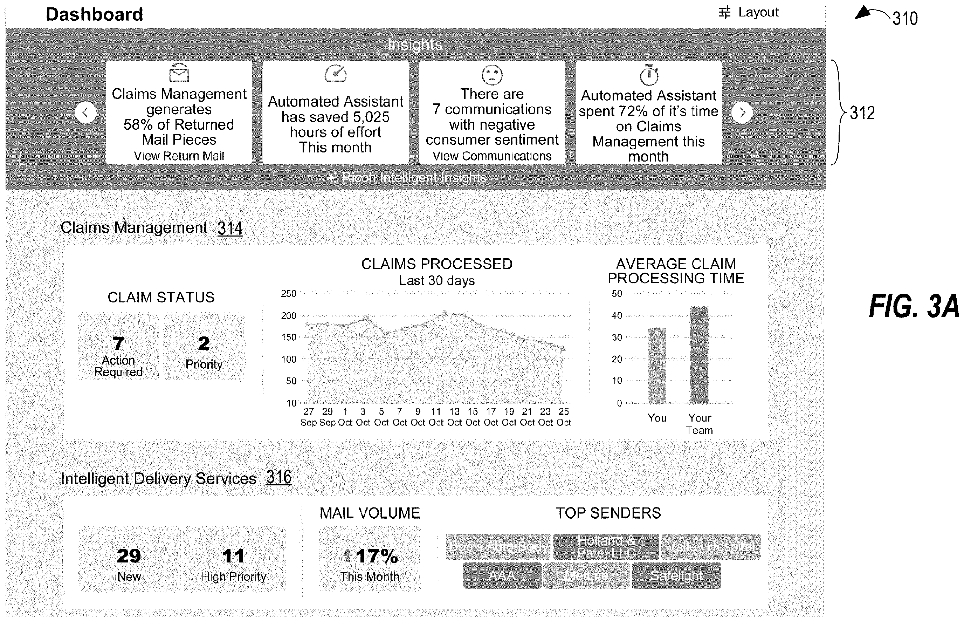

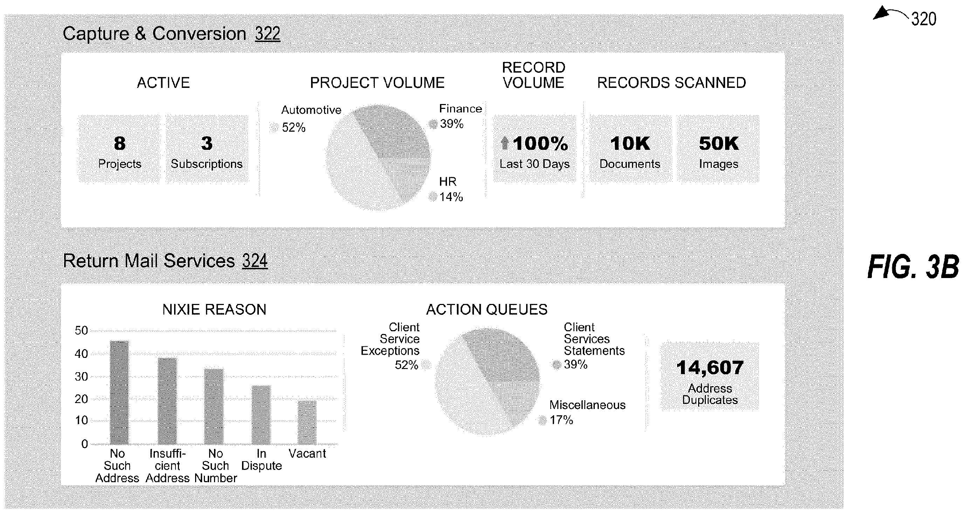

Enterprise persona devices 120-124 send data requests to insight integration system 160 over computer network 150 using portal 162. Portal 162 may include a web server application that provides an endpoint to (web or native) applications that execute on enterprise persona devices 120-124. Portal 162 receives and processes data requests. Processing a data request may involve accessing one or more records in data repository 166, each record corresponding an item. A data request may be a request for a single item or for multiple items. Examples of results of data requests are depicted in FIGs. 3A-3B, 4A-4B, and 5A-5B, described in more detail herein.

### WORKFLOW

Each item is processed in the context of a workflow. A workflow comprises multiple stages of processing. An item is assigned to a stage within a workflow. For example, in the context of claim processing, an item corresponds to a claim and the claim may be in the origination stage, the document intake stage, the packet assembly stage, the data validation stage, the adjudication stage, or the fulfillment stage. Different claims may be in different stages at any one time. In the context of return mail processing, an item corresponds to a piece of mail, which may be in the not-yet-sent stage, the sent stage, the returned stage, the contact-addressee-via-phone stage, the re-sent stage, or the acknowledgement stage. Again, different pieces of mail (or mail items) will be in different stages at any one time. Some items will move through the workflow faster than others.

In order to move (or advance) a claim from one stage to another stage in a workflow, one or more actions need to be performed. Such actions may need to be performed by one or more entities, such as (a) a user of an enterprise persona device (e.g., enterprise persona C device 124); (b) a user that originates (or is targeted by) the item (e.g., a policy holder in the context of claims processing or an addressee of a mail item, such as a user of user client device 110); (c) a third-party entity; or (d) a combination of these three entities.

Actions that may need to be performed to advance an item from one stage to another vary depending on the digital service being provided. For example, in the context of claims processing, a policy holder (e.g., a user of user client device 110) may need to provide two types of electronic documents before a claim (i.e., the item) can advance from the document intake stage to the packet assembly stage. As another example, a claims assessor (or user of enterprise persona C device 124) may need to make audible contact with a policy holder and receive one or more answers to questions from the policy holder before advancing the policy holder's claim from the data validation stage to the adjudication stage.

### INSIGHT INTEGRATOR

Insight integrator 164 integrates (or combines) insights about items that are managed by the enterprise with data about those items. The integration is viewable in a user interface that is presented on a computing device, such as enterprise persona C device 124. Thus, the user interface includes, simultaneously, both (1) data about an item and (2) one or more insights about the item. In this way, a user being presented with the user interface is not required to interact with other computers, windows, or tools in order to obtain insight into a particular item. An insight is provided to a user in such a way that the insight is easily actionable. Examples of user interfaces are described in more detail herein.

Like portal 162, insight integrator 164 may be implemented in software, hardware, or any combination of software and hardware. Insights may be generated by the enterprise that hosts insight integration system 160 and/or by one or more third-party entities, such as third-party system 140.

An insight is considered additional data that is separate from item data. Examples of insights (or additional data) include descriptive data, prescriptive data, and predictive data. Thus, an insight may be one of multiple types. Insight integrator 164 may combine multiple insights (of the same type and/or of different types) with item data about a single item. For example, data about a claim may be presented with descriptive data, prescriptive data, and predicative data.

Descriptive data about an item describes an attribute of the item relative to other items. For example, a percentage of items that are associated with the same value of an item for a particular attribute (e.g., geographic location, importance level, month origination) is calculated and displayed with data about the item.

Prescriptive data about an item indicates an action to perform relative to the item. The action may be to remedy a negative issue associated with the item or may be to advance the item to a subsequent stage in a workflow. For example, an action may be contact a person by phone in order to complete a workflow stage. Prescriptive data may include a workload calculator with which a user (e.g., a user of enterprise persona B device 122) interacts in order to adjust who is assigned to be responsible for an item and/or a work rate for one or more people assigned to items that include the item.

Predictive data about an item indicates a prediction of a future event based on state data associated with the item. The prediction may be based on trend analytics pertaining to other items and/or output from one or more machine-learned models that have been trained using one or more machine learning techniques, such as logistic regression, gradient boosting decision trees, and support vector machines. An example of predictive data is whether an item will be classified as fraud. For example, in the context of claim processing, processing electronic documents about a claim may reveal that (a) the first name of a driver's license is different than the first name of a policy holder that submitted the claim, (b) a photo of property that was stolen allegedly on Monday is timestamped as Friday of the same week, (c) a property item for which a claim request for 10K dollars is received is priced for 5K dollars in a trusted remote data source. These factors individually may increase the likelihood that the corresponding claim will be classified as fraudulent, based on data about past items that were classified as fraudulent. Predictive data may also indicate a likelihood of a particular result if an employee performs a certain action, such as calling a user that submitted a claim or is the target of a mailing.

### DATA REPOSITORY

Data repository 166 stores item data 167 about multiple items that the enterprise manages. The item data may be stored in the form of records or rows in one or more relational tables. For example, each record of item data 167 corresponds to a different item and contains multiple attributes values, each corresponding to a different attribute of the item. Attributes of an item depend on the context. In the context of claims processing, an item corresponds to a claim and attributes of a claim may include a name of a policy holder, contact information of the policy holder, a stage in a workflow of the claim, a list of zero or more anomalies detected in the claim, a fraud rating of the claim, an estimated time of resolution of the claim, and a recommended next action to perform relative to the claim. In the context of invoice processing, an item corresponds to an invoice and attributes of an invoice may include an organization name of the submitter of the invoice, contact information of the organization, an amount of the invoice, a status of the invoice (or stage in a workflow of the invoice), a duplicate determination of the invoice, an invalid determination of the invoice, a list of zero or more anomalies detected in the invoice, a fraud rating of the invoice, and an estimated time to pay the submitter of the invoice.

Data repository 166 may also store team data 168 about one or more teams of employees (e.g., claims assessors) of the enterprise. Again, team data may be stored in the form of records or rows in one or more relational tables. For example, each record of team data 168 may correspond to a different member of a team and contains multiple attribute values, each corresponding to a different attribute of the team member. Attributes of a team member depend on the context. In the context of claims processing, attributes of a team member (or claim assessor) may include first and last names of the claim assessor, a number of claims assessed on a per week basis, a proficiency level, a current number of claims assigned to each possible stage in a workflow (e.g., number of claims in the reserving stage, number of claims in the review stage, number of claims in an investigation stage, and number of claims in a negotiation stage), a claim number of the most recently assigned claim.

As another example, each record of team data 168 may correspond to a different team and contains multiple attribute values, each corresponding to a different attribute. Attributes of a team depend on the context. In the context of claims processing, attributes of a team of claim assessors may include total workload of the team (or total number of claims assigned to all team members), average workload of the team, average hours spent to resolve each claim, and a number of claims (assigned to the team) that have a fraud rating above a certain threshold.

### RULE LOGIC

Insight integration system 160 and/or another enterprise computing device may implement rule logic for (1) detecting anomalies with respect to an item based on item data (and based on any supplemental information from a third-party entity) and (2) initiating one or more actions relative to the item, such as composing and/or sending a notification (e.g., email or text message) to a certain member of the enterprise or to an end-user associated with the item, displaying a certain selectable icon (indicating the anomaly) adjacent to item data in a graphical user interface, interacting with third-party system 140, and/or generating and/or presenting additional data (e.g., prescriptive data) associated with displayed item data. A rule comprises one or more conditions associated with one or more actions, whether those actions are performed automatically by a computer system or manually by a user. If the one or more conditions of a rule are satisfied, then the associated one or more actions are performed or at least presented as options in a user interface.

For example, in the context of a return mail service, an enterprise may host a customer database that includes address information for each of multiple customers of the enterprise. In response to the enterprise receiving a piece of returned mail, an employee of the enterprise scans the returned piece of mail and causes the scan data to be transmitted to document intake service 130, which performs optical character recognition (OCR) on the scan data. Document intake service 130 recognizes a customer name and a mailing address in the scan data and transmits the information to insight integration system 160, which locates a record in the customer database that matches the customer name and/or the mailing address. Based on the record, insight integration system 160 implements multiple rules that dictate how to process the returned mail. The rules require information about a stage to which the customer is assigned and/or a type of mail that was most recently sent to the customer. If the stage is an early stage or the type of mail was considered not important, then insight integration system 160 automatically updates the mailing address with a mailing address that is found in a third-party COA database, if the mailing address found there is different. If the stage is a later stage or the type of mail is considered somewhat important, then the enterprise sends a certain letter to the old mailing address before sending anything to the new address. If the type of mail is considered very important, then a call needs to be made to the customer before attempting to resend the mail to the new address. In this case, insight integration system 160 may include a graphical call button adjacent to item data (in a GUI) about the returned mail. User selection of the call button may trigger making a call immediately. For each possible action, insight integration system 160 may determine a likelihood of success of the mail being delivered to the customer's proper mailing address based on (a) attributes of the returned mail and the customer (e.g., using one or more machine-learned models) or (b) past scenarios that involved returned mail to the enterprise. For example, 53% of past re-mailings based on an updated address alone resulted in successful re-mailings (where the mail was not returned); or 75% of past calls to customers resulted in obtaining accurate addresses (where the mail was resent and not returned).

One or more representatives of an enterprise may define their own rules in machine-readable code, rather than relying on default rules defined by the entity that provides insight integration system 160. Thus, rules may be easily encoded. Alternatively, an enterprise representative may communicate a description of one or more rules to a representative the entity that provides insight integration system 160, who writes the one or more rules into machine-readable code.

### INPUTS AND OUTPUTS OF INSIGHT INTEGRATION SYSTEM

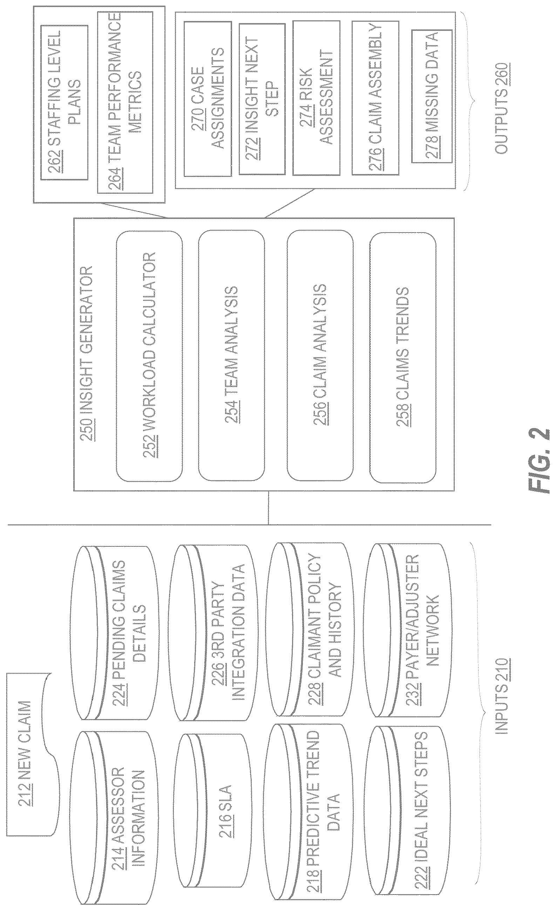

FIG. 2 is a block diagram that depicts example inputs 210 and outputs 260 of an insight generator 250, in an embodiment. In this example, inputs 210 and outputs 260 relate to claims processing, but embodiments are not so limited. Insight generator 250 may be part of insight integration system 160, which acts as a single, easy-to-consume service that is integrated with one or more external computer systems and/or data sources.

Inputs 210 include new claims 212, assessor information 214, service level agreements (SLAs) 216, predictive trend data 218, ideal next steps 222, pending claims details 224, 3^{rd} party integration data 226, claimant policy and history 228, payer/adjuster network 232. Some of inputs 210 may be used multiple times, each time to generate a different one of outputs 260.

New claims 212 may originate directly from a policy holder (e.g., operating user client device 110) or indirectly from the policy holder through a call representative that creates a new claim in a claims database.

Assessor information 214 include information about a set of claim assessors, such as name, start date, supervisor name, assigned department, and proficiency level. Assessor information 214 may originate from the enterprise itself.

SLAs 216 pertain to agreements between the enterprise and one or more regulatory bodies, such as an agreement to process a claim within a certain period of time. SLAs 216 may be dictated by the regulatory bodies, but defined by the enterprise as business rules about which electronic systems need to know.

Predictive trend data 218 may include trend data for claims generally. For example, based on historical trends, claims in Florida increase by 70% during hurricane season. Other types of trends may be discovered by analyzing historical data, such as the change (increase/decrease) in number of processed claims and the number of claims in backlog, their type and complexity. Historical data may include third-party data.

Ideal next steps 222 outlines a set of steps, such as a linear set of steps or steps in a directed acyclic graph (DAG), that should be performed for each claim in a particular order. Ideal next steps 222 may be defined by a representative of the enterprise.

Pending claims details 224 lists details about each claim that is pending and, therefore, has not been completed or resolved. Once a claim is complete, then an enterprise may no longer need to perform any actions relative to the claim. Details of pending claims may include a name of the policy holder (who submitted the claim), a policy identifier that identifies a policy of the policy holder, an asserted value of the claim, a date of the submission, a location of the claim or incident that caused the claim, whether the claim has been reported to authorities, whether people were involved in the incident, etc.

3^{rd} party integration data 226 is data from one or more third-party systems, such as third-party system 140. Insight generator 250 may process data from such a data source before generating output based on that processed data. Examples of processing include data type conversions, truncating, stemming, and combining the data with data from other data sources.

Claimant policy and history 228 contains data about policy holders who previously submitted claims and their respective policies that the policy holders held at the time of those submitted claims.

Payer/adjuster network 232 contains data about the entity (or entities) that paid policy holders for their claims and entities that adjusted claim amounts before payout of the claims.

Inputs 210 are inputs to insight generator 250, which comprises multiple components, including workload calculator 252, team analyzer 254, claim analyzer 256, and claims trends 258. Each component of insight generator 250 may be implemented in software, hardware, or a combination of software and hardware.

Workload calculator 252 calculates, based on assessor information 214 and ideal next steps 222, one or more performance metrics, such as per worker (e.g., claim assessor) throughput (e.g., number of claims successfully processed to completion per week, average pendency of each claim, etc.) and quality (e.g., number of escalations (e.g., reassignment of a claim to a different assessor, contacting a claim assessor about a particular claim), customer satisfaction scores), as well as per team throughput and quality. Workload calculator 252 may calculate performance metrics per stage of the claim pipeline with benchmarking against a team by stage to identify training and improvement opportunities for the team.

Workload calculator 252 may also generate staffing level plans 262 based on assessor information 214, SLAs 216, and pending claims details 224. Staffing level plans 262 ensure that there are a sufficient number of claims assessors to handle the current set of claims in a timely manner in order to achieve SLAs 216. Staffing level plans 262 may also be forward looking by taking into account predictive trend data 218 pertaining to the number of claims received over time and/or the efficiency of the current claim assessors over time (where efficiency over time may refer to the change in throughput of each claim assessor over time).

Team analyzer 254 generates team performance metrics 264 based on assessor information 214, SLAs 216, claimant policy and history 228, and/or payer/adjuster network 232. Team performance metrics 264 may include performance of individual team members based on length of each stage of each claim assigned to the team member, type of claims handled by the team member, errors originating from each team member, and payout per team member.

Claim analyzer 256 generates case assignments 270 for new claims 212 (which assigning may involve a single claim assignment at a time for each new claim that comes into the enterprise's system) based on information about the claim, assessor information 214, SLAs 216 that might affect current claims assigned to each claim assessor indicated in assessor information 214, predictive trend data 218 indicating the velocity of claims or types of claims that may require special skills or abilities that are held by a strict subset of the available claim assessors, pending claims details 224 (e.g., indicating how close claims (currently assigned to each assessor) are to completion), and claimant policy and history 228 (indicating attributes of the policy in question and indicating how responsive and helpful the claimant of the claim interacted with the enterprise in the past).

Claim analyzer 256 generates insight next step 272 for each pending claim based on pending claims details 224, ideal next steps 222, 3^{rd} party integration data 226, and/or predictive trend data 218.

Claim analyzer 256 generates risk assessment 274 for each pending claim based on pending claims details 224, 3^{rd} party integration data 226, and/or predictive trend data 218. Claim analyzer 256 may be triggered to provide an update to a risk assessment of a pending claim whenever a change occurs relative to the pending claim.

Claim analyzer 256 generates claim assembly 276 for a particular claim. A claim typically requires several documents to be completed and submitted in full before adjudication can happen. The process of claim assembly is locating those documents and digitally grouping them together. Such grouping is performed based on claim type, state (or location), size of claim and involves determining whether documents are originals or duplicates.

Claim analyzer 256 generates missing data 278 that indicates what information in a claim is missing. Claim analyzer 256 analyzes each claim in new claims 212 and is related to claim assembly 276. The process of generating missing data 278 involve determining which documents are missing in a claim and who needs to provide those documents (e.g., a policy holder or a third-party medical provider), including ways to reach out and keep an audit trail within the system of communication between parties.

Claims trends 258 generates data for an enterprise view, rather than data pertaining to a specific claim. Output of claims trends 258 may be tied to team performance and staffing levels, and may also include predictions in volume, complexity, type expected over X days/months.

As depicted in FIG. 2, outputs 260 of insight generator 250 include two sets of outputs, one for users of one persona (e.g., managers or team leaders) and one for users of another persona (e.g., claim assessor).

### EXAMPLES OF INSIGHT INTEGRATIONS

One goal of embodiments includes bringing actions forward for a user to take or not take. Another goal is to combine insights with item-related data to enrich previously non-descriptive data. The following screenshots of user interfaces (generated by insight integrator 164) illustrate a result of implementing both of these goals.

FIGs. 3A-3B are screenshots of an example user interface that combines insights 312 with item-related data, in an embodiment. User interfaces 310-320 constitute a single dashboard view (of services) utilized by an owner or manager of an enterprise that leverages multiple digital services, including a claims management service (that manages insurance claims), a delivery service (that delivers physical and/or digital mail), a capture and conversion service (e.g., scanning and processing documents, including performing OCR on some of those documents), and a return mail service (which may be used when mail is returned to the enterprise that is the source of mail). Thus, user interface 310 includes a section 314 for claims management and section 316 for intelligent delivery, while user interface 320 includes a section 322 for capture and conversion and section 324 for returned mail management.

Insights 312 that is included in user interface 310 comprises four different insights: a percentage of returned mail that is generated from claims management, a number of worker hours that an automated assistant has saved during a current month, a number of communications with negative consumer sentiment, and an indication of a percentage of time that the automated assistant spent on tasks related to claims management during the current month. The first and second insights include links to view more information about the service or communications in question. For example, selecting the third insight causes the user interface to be updated to display data about at least a subset of the seven communications that have negative consumer sentiment.

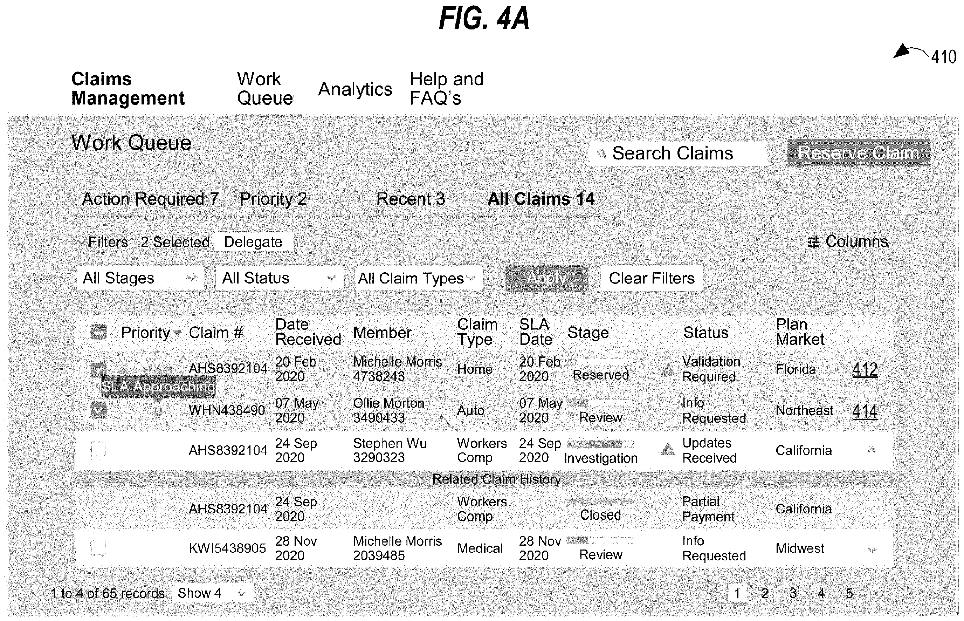

FIG. 4A is a screenshot of an example user interface 410 for displaying details of pending claims, in an embodiment. User interface 410 lists multiple claims and information about each claims, including about claims 412 and 414. User interface 410 may be generated for certain types of users or personas, such as claim assessors. Each claim has a priority rating, a claim number, a date received, a policy holder (or member) name, a claim type, an SLA date, a stage indicator, a status, and a plan market location. As user interface 410 indicates, not only do claims 412-414 have different claim types, claims 412-414 are also assigned to different stages. Additionally, claim 412 has a relatively high priority (with three fire icons) and claim 414 has a lower priority (at least relative to claim 412), as indicated by the one fire icon. Selecting the sole fire icon in claim 414 (or hovering a cursor control pointer over the sole fire icon) causes data about what causes the priority rating to be presented. In this example, an SLA date is approaching for claim 414, indicating that action should be take on that claim soon.

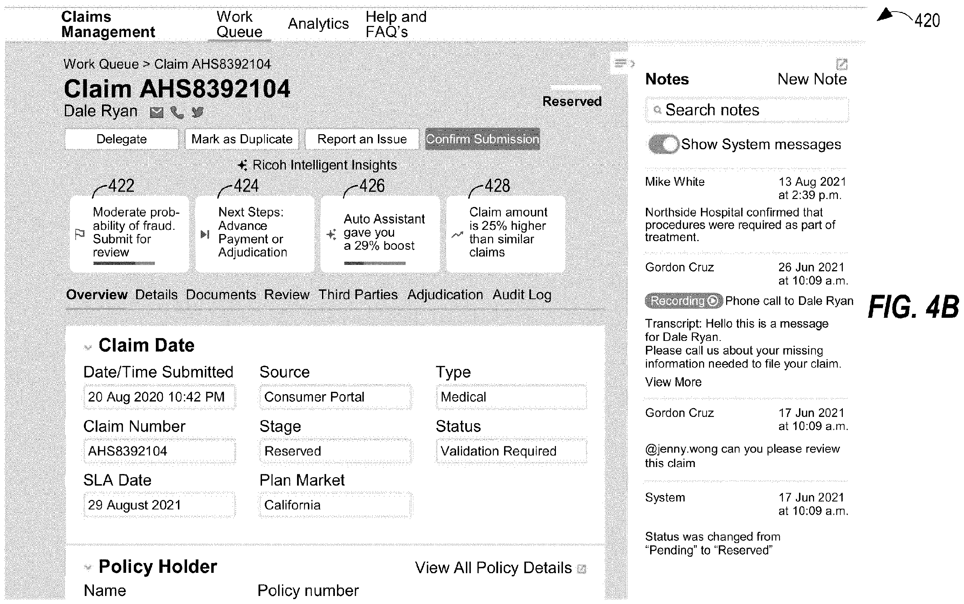

FIG. 4B is a screenshot of an example user interface 420 for displaying insights along with details of a claim, in an embodiment. User interface 420 may be presented in response to selecting claim 412 in user interface 410. (Thus, user interface 420 may be directed to users of the same persona as the persona of users of user interface 410.) Such a selection may involve selecting the claim number of claim 414. User interface 420 comprises insights 422-428 along with details of a single claim. Each of insights 422-428 may be selectable graphical elements. The content of one or more of insights 422-428 may have been generated on-the-fly, or in response to selection of claim 412 in user interface 420. Additionally or alternatively, the content of one or more of insights 422-428 may have been generated and stored in association with the selected claim some time prior to user selection of claim 412, such as when details about the claim changed, such as a change in a stage of the claim, a new document is received for the claim, or a day closer to a relevant SLA date.

Insight 422 is an example of predictive data about the selected claim and indicates a probability of fraud. Insight 422 is also associated with an action. User selection of insight 422 causes the claim to be submitted to manual review. This may mean that data about the claim may be placed in a queue that is manually reviewed by one or more human reviewers.

Insight 424 is an example of a particular action to perform relative to the selected claim. User selection of insight 424 may cause the claim to be paid out or adjudicated.

Insights 426-428 are examples of descriptive data that provide more contextual information about the selected claim in relation to other claims. Specifically, insight 426 indicates that an auto assistant tool provided a 29% boost in some metric, such as a reduction in time or worker hours. Insight 428 indicates that the claim amount of the selected claim is 25% higher than similar claims. A similar claim may be claims of the same type (e.g., medical claim, home claim, auto claim) or claims that also share one or more other attributes in common, such as location, square feet of house, make of car, etc.

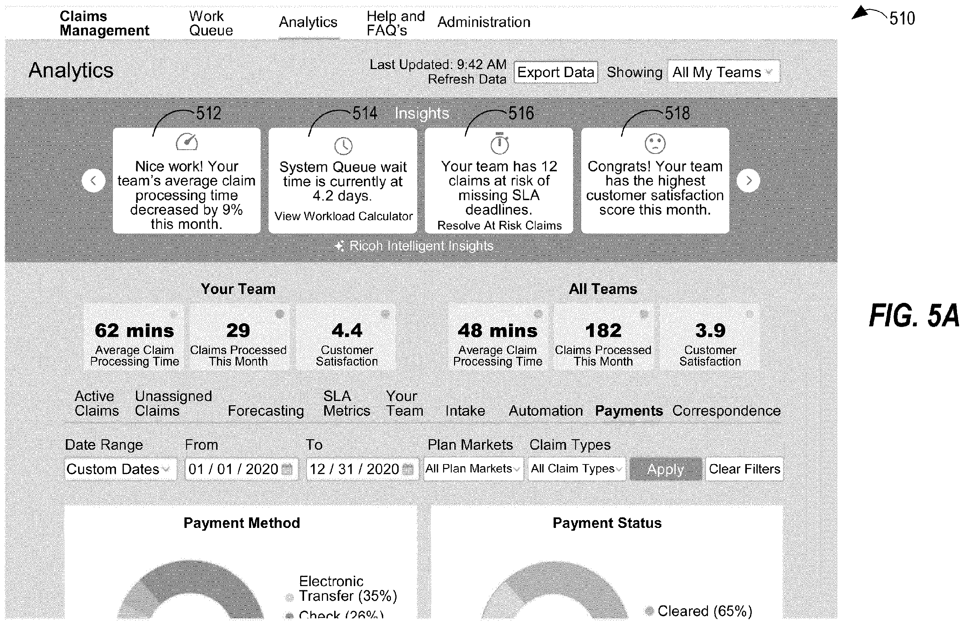

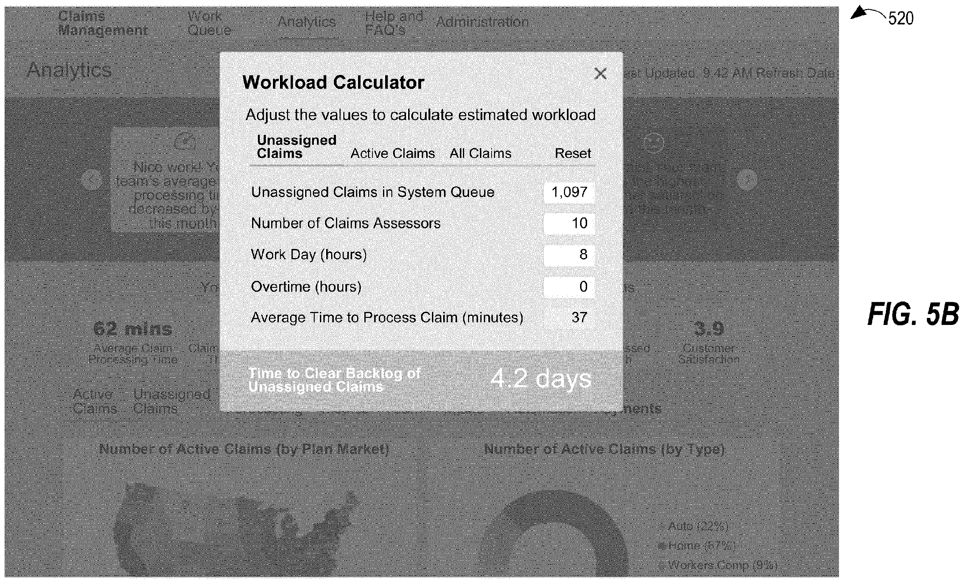

FIG. 5A is a screenshot of an example user interface 510 that displays insights along with team-level data for a manager, in an embodiment. User interface 510 includes insights 512-518, each of which is an example of descriptive data. Insight 512 describes performance of a team relative to the team's performance in the past. Specifically, insight 512 indicates that a team's claim processing time decreased by 9% in the current month relative to the previous month or other time period. Insight 514 indicates a current wait time (i.e., 4.2 days) of items in a queue. Insight 514 includes a link that, when selected, causes a workload calculator to be presented, which is depicted in FIG. 5B.

Insight 516 indicates that the team has twelve claims that are in danger of missing SLA deadlines. User selection of insight 516 may cause user interface 510 to be updated to display those twelve claims. Insight 518 indicates that the team has the highest customer satisfaction score in the current month. User selection of insight 518 may cause user interface 510 to be updated to display the customer satisfaction score along with customer satisfaction scores of other teams and/or breakdown of customer satisfaction scores for individual members of the team.

FIG. 5B is a screenshot of an example user interface 520 that includes a pop-up window for displaying a workload calculator, in an embodiment. This allows a manager or owner in an enterprise to adjust one or more work-related parameters in order to reduce a backlog in unassigned items, or claims in this example. The work-related parameters include number of unassigned claims in a queue, a number of claim assessors, a number of hours in a work day, a number of hours in overtime, and an average time (in minutes) to process a claim. But adjusting one or more work-related parameter values, a different time to clear the backlog may be calculated. For example, if the number of claim assessors increases to 13, then the 4.2 days may be reduced to a different estimate.

### EXAMPLE PROCESS

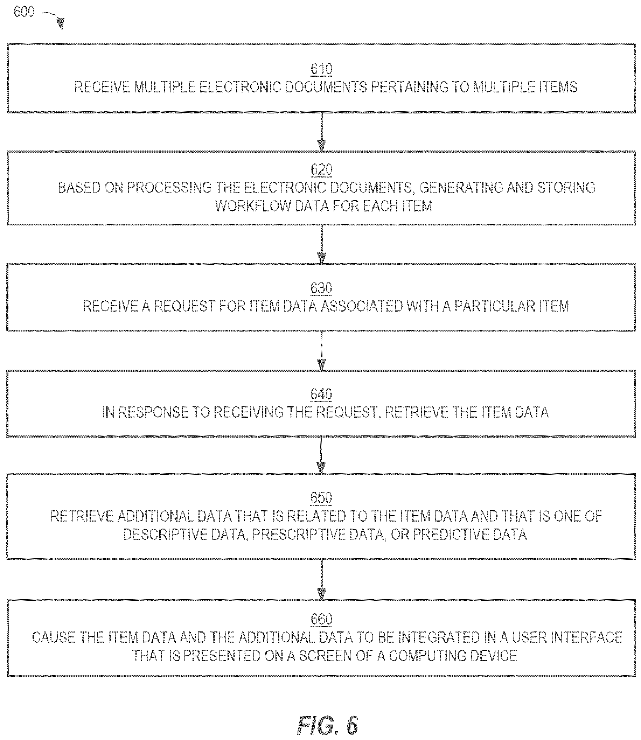

FIG. 6 is a flow diagram that depicts an example process 600 for integrating insights with item data that pertains to a workflow, in an embodiment. Process 600 may be performed by different components of insight integration system 160.

At block 610, multiple electronic documents pertaining to multiple items are received. The items are managed by an online digital service such as claim processing, invoice processing, or mail processing.

At block 620, based on processing the electronic documents, workflow data for the item is stored. The workflow data includes multiple workflow data items, each workflow data item indicating a stage of a corresponding item of the multiple items. For example, an item is a claim and a claim may be in one of six possible stages.

At block 630, a request for item data associated with a particular item is received. A request may originate from one of enterprise persona devices 120-124. Block 630 may be performed by portal 162. The request may include an item identifier that uniquely identifies the particular item in insight integration system 160. The request may additionally or alternatively be for a dashboard view that lists information about multiple digital services that the enterprise utilizes. A request may instead originate from user client device 110. Such a request may provide the user information about actions the user may take to increase the chances of the user's item being processed quickly or according to another metric with which the user may be interested, depending on the context. For example, a user may want to know the status of his/her claim and, as a result, insight integration system 160 generates a user interface that provides details of the user's claim along with insights about which documents are missing that could speed up the process and how quickly similar claims are being processed.

At block 640, in response to receiving the request, the item data is retrieved. For example, insight integrator 164 looks up a record in data repository 166 using an item identifier of the particular item.

At block 650, additional data is also retrieved. For example, insight integrator 164 retrieves the additional data from data repository 166. Blocks 640-650 may be the result of a single retrieve request from insight integrator 164. Insight integration system 160 may have generated the additional data based on data about other items and/or based on data from third-party system 140. Alternatively, the additional data may have entirely originated from third-party system 140. The additional data is one of descriptive data, prescriptive data, or predictive data.

At block 660, the item data and the additional data are presented simultaneously on a screen of a computing device. Block 660 may involve insight integrator 164 generating user interface data that includes both the item data and the additional data in a single view or window. Portal 162 then forwards the user interface data over computer network 150 to the computer device that sent the request that triggered blocks 630-660.

### IMPLEMENTATION MECHANISMS

According to one embodiment of the invention, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

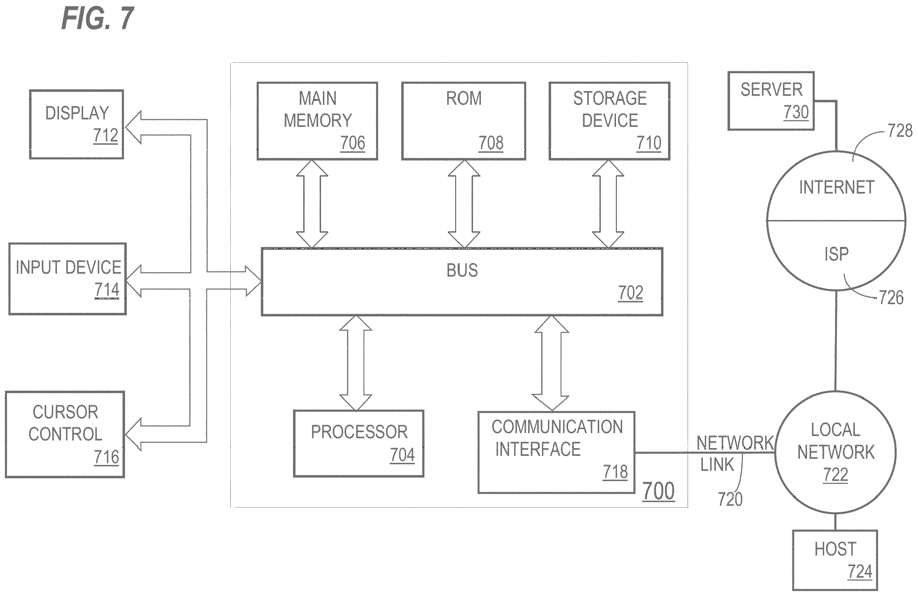

FIG. 7 is a block diagram that depicts an example computer system 700 upon which embodiments of the invention may be implemented. Computer system 700 includes a bus 702 or other communication mechanism for communicating information, and a processor 704 coupled with bus 702 for processing information. Computer system 700 also includes a main memory 706, such as a random access memory (RAM) or other dynamic storage device, coupled to bus 702 for storing information and instructions to be executed by processor 704. Main memory 706 also may be used for storing temporary variables or other intermediate information during execution of instructions to be executed by processor 704. Computer system 700 further includes a read only memory (ROM) 708 or other static storage device coupled to bus 702 for storing static information and instructions for processor 704. A storage device 710, such as a magnetic disk or optical disk, is provided and coupled to bus 702 for storing information and instructions.

Computer system 700 may be coupled via bus 702 to a display 712, such as a cathode ray tube (CRT), for displaying information to a computer user. Although bus 702 is illustrated as a single bus, bus 702 may comprise one or more buses. For example, bus 702 may include without limitation a control bus by which processor 704 controls other devices within computer system 700, an address bus by which processor 704 specifies memory locations of instructions for execution, or any other type of bus for transferring data or signals between components of computer system 700.

An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (e.g., x) and a second axis (e.g., y), that allows the device to specify positions in a plane.

Computer system 700 may implement the techniques described herein using customized hard-wired logic, one or more ASICs or FPGAs, firmware and/or program logic or computer software which, in combination with the computer system, causes or programs computer system 700 to be a special-purpose machine. According to one embodiment of the invention, those techniques are performed by computer system 700 in response to processor 704 executing one or more sequences of one or more instructions contained in main memory 706. Such instructions may be read into main memory 706 from another computer-readable medium, such as storage device 710. Execution of the sequences of instructions contained in main memory 706 causes processor 704 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing data that causes a computer to operate in a specific manner. In an embodiment implemented using computer system 700, various computer-readable media are involved, for example, in providing instructions to processor 704 for execution. Such a medium may take many forms, including but not limited to, non-volatile media and volatile media. Non-volatile media includes, for example, optical or magnetic disks, such as storage device 710. Volatile media includes dynamic memory, such as main memory 706. Common forms of computer-readable media include, for example, a floppy disk, a flexible disk, hard disk, magnetic tape, or any other magnetic medium, a CD-ROM, any other optical medium, a RAM, a PROM, and EPROM, a FLASH-EPROM, any other memory chip or memory cartridge, or any other medium from which a computer can read.

Various forms of computer-readable media may be involved in carrying one or more sequences of one or more instructions to processor 704 for execution. For example, the instructions may initially be carried on a magnetic disk of a remote computer. The remote computer can load the instructions into its dynamic memory and send the instructions over a telephone line using a modem. A modem local to computer system 700 can receive the data on the telephone line and use an infra-red transmitter to convert the data to an infra-red signal. An infra-red detector can receive the data carried in the infra-red signal and appropriate circuitry can place the data on bus 702. Bus 702 carries the data to main memory 706, from which processor 704 retrieves and executes the instructions. The instructions received by main memory 706 may optionally be stored on storage device 710 either before or after execution by processor 704.

Computer system 700 also includes a communication interface 718 coupled to bus 702. Communication interface 718 provides a two-way data communication coupling to a network link 720 that is connected to a local network 722. For example, communication interface 718 may be an integrated services digital network (ISDN) card or a modem to provide a data communication connection to a corresponding type of telephone line. As another example, communication interface 718 may be a local area network (LAN) card to provide a data communication connection to a compatible LAN. Wireless links may also be implemented. In any such implementation, communication interface 718 sends and receives electrical, electromagnetic or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communication services through the world wide packet data communication network now commonly referred to as the "Internet" 728. Local network 722 and Internet 728 both use electrical, electromagnetic or optical signals that carry digital data streams.

Computer system 700 can send messages and receive data, including program code, through the network(s), network link 720 and communication interface 718. In the Internet example, a server 730 might transmit a requested code for an application program through Internet 728, ISP 726, local network 722 and communication interface 718. The received code may be executed by processor 704 as it is received, and/or stored in storage device 710, or other non-volatile storage for later execution.

Aspects of the present disclosure are, for example, as follows.
Aspect 1. A method comprising:
   receiving a plurality of electronic documents pertaining to a plurality of items that is managed by an online digital service;
   based on processing the plurality of electronic documents, storing workflow data for the plurality of items, wherein the workflow data comprises a plurality of workflow data items, each workflow data item indicating a status of a corresponding item of the plurality of items;
   receiving, from a computing device, a request for item data associated with a particular item of the plurality of items;
   in response to receiving the request:
      retrieving the item data;
      retrieving additional data that is generated by a computer system that is separate from the apparatus;
      wherein the additional data is one of descriptive data that describes an attribute of the particular item relative to other items, prescriptive data that indicates an action to perform, or predictive data that indicates a prediction of a future event based on state data associated with the particular item;
      causing the item data and the additional data to be presented simultaneously on a screen of the computing device;
   wherein the method is performed by one or more computing devices.
Aspect 2. The method of Aspect 1, further comprising:
   receiving, from a third party computer system that is remote relative to the apparatus, third-party data;
   storing an association between the third-party data and the particular item;
   wherein the additional data is also generated based on the third-party data.
Aspect 3. The method of Aspect 1, further comprising:
   in response to receiving the request, performing an analysis of multiple items that are separate from the particular item and generating the additional data based on the analysis.
Aspect 4. The method of Aspect 1, wherein the additional data comprises two or more of the descriptive data, the prescriptive data, or the predictive data.
Aspect 5. The method of Aspect 1, wherein the additional data is prescriptive data, further comprising:
   receiving, from the computing device, input that selects the prescriptive data;
   in response to receiving the input, causing the action to be performed by a computing system that is remote relative to the apparatus.
Aspect 6. The method of Aspect 1, wherein a first user of the computing device is associated with a first persona, wherein the additional data belongs to a first type of data that is associated with the first persona, further comprising:
   receiving, from a second computing device of a second user that is associated with a second persona that is different than the first persona, a second request for second item data associated with a second item of the plurality of items;
   in response to receiving the second request:
      retrieving the second item data;
      based on the second user being associated with the second persona, retrieving second additional data that belongs to a second type of data that is associated with the second persona;
      wherein the second additional data is one of second descriptive data that describes an attribute of the second item relative to other items, second prescriptive data that indicates a second action to perform, or second predictive data that indicates a second prediction of a second future event based on second state data associated with the second item;
   causing the second item data and the second additional data to be presented simultaneously on a screen of the second computing device.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. An apparatus for providing intelligent insights in a workflow, the apparatus comprising a memory storing instructions which, when executed by one or more processors, cause:
receiving a plurality of electronic documents pertaining to a plurality of items that is managed by an online digital service;
based on processing the plurality of electronic documents, storing workflow data for the plurality of items, wherein the workflow data comprises a plurality of workflow data items, each workflow data item indicating a status of a corresponding item of the plurality of items;
receiving, from a computing device, a request for item data associated with a particular item of the plurality of items;
in response to receiving the request:
retrieving the item data;
retrieving additional data that is generated by a computer system that is separate from the apparatus;
wherein the additional data is one of descriptive data that describes an attribute of the particular item relative to other items, prescriptive data that indicates an action to perform, or predictive data that indicates a prediction of a future event based on state data associated with the particular item;
causing the item data and the additional data to be presented simultaneously on a screen of the computing device.

2. The apparatus of Claim 1, wherein the instructions which, when executed by one or more processors, further cause:
receiving, from a third party computer system that is remote relative to the apparatus, third-party data;
storing an association between the third-party data and the particular item;
wherein the additional data is also generated based on the third-party data.

3. The apparatus of Claim 1, wherein the instructions which, when executed by one or more processors, further cause:
in response to receiving the request, performing an analysis of multiple items that are separate from the particular item and generating the additional data based on the analysis.

4. The apparatus of Claim 1, wherein the additional data comprises two or more of the descriptive data, the prescriptive data, or the predictive data.

5. The apparatus of Claim 1, wherein the computer system is hosted by a third-party service.

6. The apparatus of Claim 1, wherein the additional data is prescriptive data, wherein instructions which, when executed by one or more processors, further cause:
receiving, from the computing device, input that selects the prescriptive data;
in response to receiving the input, causing the action to be performed by a computing system that is remote relative to the apparatus.

7. The apparatus of Claim 1, wherein a first user of the computing device is associated with a first persona, wherein the additional data belongs to a first type of data that is associated with the first persona, wherein the instructions which, when executed by one or more processors, further cause:
receiving, from a second computing device of a second user that is associated with a second persona that is different than the first persona, a second request for second item data associated with a second item of the plurality of items;
in response to receiving the second request:
retrieving the second item data;
based on the second user being associated with the second persona, retrieving second additional data that belongs to a second type of data that is associated with the second persona;
wherein the second additional data is one of second descriptive data that describes an attribute of the second item relative to other items, second prescriptive data that indicates a second action to perform, or second predictive data that indicates a second prediction of a second future event based on second state data associated with the second item;
causing the second item data and the second additional data to be presented simultaneously on a screen of the second computing device.

8. One or more storage media storing instructions which, when executed by one or more computing devices, cause:
receiving a plurality of electronic documents pertaining to a plurality of items that is managed by an online digital service;
based on processing the plurality of electronic documents, storing workflow data for the plurality of items, wherein the workflow data comprises a plurality of workflow data items, each workflow data item indicating a status of a corresponding item of the plurality of items;
receiving, from a computing device, a request for item data associated with a particular item of the plurality of items;
in response to receiving the request:
retrieving the item data;
retrieving additional data that is generated by a computer system that is separate from the apparatus;
wherein the additional data is one of descriptive data that describes an attribute of the particular item relative to other items, prescriptive data that indicates an action to perform, or predictive data that indicates a prediction of a future event based on state data associated with the particular item;
causing the item data and the additional data to be presented simultaneously on a screen of the computing device.

9. The one or more storage media of Claim 8, wherein the instructions which, when executed by one or more processors, further cause:
receiving, from a third party computer system that is remote relative to the apparatus, third-party data;
storing an association between the third-party data and the particular item;
wherein the additional data is also generated based on the third-party data.

10. The one or more storage media of Claim 8, wherein the instructions which, when executed by one or more processors, further cause:
in response to receiving the request, performing an analysis of multiple items that are separate from the particular item and generating the additional data based on the analysis.

11. The one or more storage media of Claim 8, wherein the additional data comprises two or more of the descriptive data, the prescriptive data, or the predictive data.

12. The one or more storage media of Claim 8, wherein the computer system is hosted by a third-party service.

13. The one or more storage media of Claim 8, wherein the additional data is prescriptive data, wherein instructions which, when executed by one or more processors, further cause:
receiving, from the computing device, input that selects the prescriptive data;
in response to receiving the input, causing the action to be performed by a computing system that is remote relative to the apparatus.

14. The one or more storage media of Claim 8, wherein a first user of the computing device is associated with a first persona, wherein the additional data belongs to a first type of data that is associated with the first persona, wherein the instructions which, when executed by one or more processors, further cause:
receiving, from a second computing device of a second user that is associated with a second persona that is different than the first persona, a second request for second item data associated with a second item of the plurality of items;
in response to receiving the second request:
retrieving the second item data;
based on the second user being associated with the second persona, retrieving second additional data that belongs to a second type of data that is associated with the second persona;
wherein the second additional data is one of second descriptive data that describes an attribute of the second item relative to other items, second prescriptive data that indicates a second action to perform, or second predictive data that indicates a second prediction of a second future event based on second state data associated with the second item;
causing the second item data and the second additional data to be presented simultaneously on a screen of the second computing device.

15. A method comprising:
receiving a plurality of electronic documents pertaining to a plurality of items that is managed by an online digital service;
based on processing the plurality of electronic documents, storing workflow data for the plurality of items, wherein the workflow data comprises a plurality of workflow data items, each workflow data item indicating a status of a corresponding item of the plurality of items;
receiving, from a computing device, a request for item data associated with a particular item of the plurality of items;
in response to receiving the request:
retrieving the item data;
retrieving additional data that is generated by a computer system that is separate from the apparatus;
wherein the additional data is one of descriptive data that describes an attribute of the particular item relative to other items, prescriptive data that indicates an action to perform, or predictive data that indicates a prediction of a future event based on state data associated with the particular item;
causing the item data and the additional data to be presented simultaneously on a screen of the computing device;
wherein the method is performed by one or more computing devices.
